# EUROPEAN PATENT APPLICATION

(11) **EP 2 227 991 A1**
(43) Date of publication of application: **15.09.2010**
(21) Application number: 08869146.4
(22) Date of filing: 11.12.2008
(51) Int. Cl.: A47F 5/00, G07G 1/01, G09F 3/00

(54) **SHELF LABEL DISPLAY CONTROL DEVICE AND SHELF LABEL DISPLAY CONTROL METHOD, AND ELECTRONIC SHELF LABEL SYSTEM**

(30) Priority: 28.12.2007 JP 2007340056
(71) Applicant: SII Data Service Corp., Chiba-shi, Chiba 261-8507 (JP)
(72) Inventor: OKINA, Shigetaka, Chiba-shi Chiba 261-8507 (JP)
(74) Representative: Cloughley, Peter Andrew
(86) International application number: PCT/JP2008/072574
(87) International publication number: WO 2009/084403

(57) **Abstract**

Provided is a shelf label display control device capable of controlling, freely without trouble, information to be displayed on a shelf label terminal capable of storing an image and plural pieces of display data. An input of a shelf label display update instruction storing at least any one of a terminal ID, an item code, and synthesis information is received. Display-related data is updated based on any one or a plurality of the ID of the shelf label terminal, the item code, and the synthetic information, which are designated by the instruction, and display data is generated from the updated display-related data and template data recorded in association with a template data ID included in the display-related data. The generated display data is transmitted to the shelf label terminal (5) based on the ID of the shelf label terminal included in the updated display-related data.

## Description

### Technical Field

The present invention relates to a shelf label display control device and a shelf label display control method for controlling information displayed on a shelf label terminal, and an electronic shelf label system.

### Background Art

Conventionally, a shelf label terminal is used for electronically displaying a name and a price of a commodity displayed on a store shelf in a supermarket or a convenience store. With the use of the shelf label terminal as described above, prices and names of commodities may be readily changed from a management device via a communication network, and hence the shelf label terminal is used in many occasions in recent years. Patent Document 1 discloses, as a related art thereof, a technology for a price display device for displaying a commodity price, which is capable of preventing the occurrence of a state where a displayed price is different from a commodity price used in a cash register.
Patent Document 1: JP 11-316878 A

### Disclosure of the Invention

### Problem to be solved by the Invention

Meanwhile, a conventional shelf label terminal merely displays numbers indicating a commodity price and a commodity name in a character display region defined at a predetermined position. Accordingly, as a technology of controlling a display on a next-generation shelf label terminal which is capable of storing images and a plurality of display data items, there is a demand for a technology capable of displaying and changing, freely without trouble, information to be displayed on a screen of the shelf label terminal.

In view of the above, it is an object of the present invention to provide a shelf label display control device and a shelf label display control method capable of controlling, freely without trouble, information to be displayed on a shelf label terminal capable of storing images and a plurality of display data items.

### Means for solving the Problem

In order to attain the above-mentioned object, the present invention provides a shelf label display control device for controlling display information in a shelf label terminal, including: shelf label display commodity storage means for storing commodity identification information for identifying a commodity in association with shelf label identification information for identifying the shelf label terminal that displays information on the commodity; template data storage means for storing template data identification information for identifying template data for a display screen to be displayed on the shelf label terminal and storing the template data in association with the template data identification information; display-related data storage means for storing display-related data in which at least the shelf label identification information, template data identification information of template data to be displayed on the shelf label terminal identified by the shelf label identification information, and synthesis information to be displayed after being synthesized with the template data are associated with one another; display update instruction reception means for receiving an input of a shelf label display update instruction storing at least any one of the shelf label identification information, the commodity identification information, and the synthesis information; display information update means for updating a memory content of the display-related data storage means, based on any one or a plurality of items of information designated by the shelf label display update instruction, the information including the shelf label identification information, the commodity identification information, and the synthesis information; display data generation means for generating display data, based on the display-related data having the memory content updated by the display information update means and on the template data stored in the template data storage means in association with the template data identification information included in the display-related data; and display data transmission means for transmitting, based on the shelf label identification information included in the display-related data having the memory content updated, the generated display data to the shelf label terminal.

Further, according to the present invention, the shelf label display control device described above further includes: display switching instruction input reception means; and display data switching means. In the shelf label display control device: the display-related data storage means stores a plurality of different items of display-related data identification information in association with the shelf label identification information; the display switching instruction input reception means receives an input of a display switching instruction storing the shelf label identification information and the display-related data identification information; and the display data switching means transmits the display-related data identification information indicated by the display switching instruction, based on the shelf label identification information indicated by the display switching instruction, to the shelf label terminal.

Further, according to the present invention, the shelf label display control device described above further includes: display data storage means; displayed data storage means; and displayed data output means. In the shelf label display control device: the display data transmission means transmits a plurality of items of display data to be stored in the shelf label terminal, to the shelf label terminal; the display data storage means stores each of the plurality of items of display data in association with display data identification information for identifying the item of the display data; the displayed data storage means stores the display data identification information on display data currently displayed; and the displayed data output means receives an input of an output instruction of the display data currently displayed, reads out the display data identification information stored in the displayed data storage means, and outputs the display data stored in the displayed data storage means in association with the display data identification information.

Further, according to the present invention, the shelf label display control device described above further includes a display data correction means. In the shelf label display control device: the display-related data storage means stores, as the display-related data, type information of the shelf label terminal in association with the shelf label identification information; and the display data correction means corrects the generated display data so as to correspond in size to the type information associated with the shelf label identification information stored in the shelf label display update instruction.

The present invention also provides a shelf label display control method used in a shelf label display control device for controlling display information in a shelf label terminal, including: storing, by shelf label display commodity storage means, commodity identification information for identifying a commodity in association with shelf label identification information for identifying the shelf label terminal that displays information on the commodity; storing, by template data storage means, template data identification information for identifying template data for a display screen to be displayed on the shelf label terminal and storing the template data in association with the template data identification information; storing, by display-related data storage means, display-related data in which at least the shelf label identification information, template data identification information of template data to be displayed on the shelf label terminal identified by the shelf label identification information, and synthesis information to be displayed after being synthesized with the template data are associated with one another; receiving, by display update instruction reception means, an input of a shelf label display update instruction storing at least any one of the shelf label identification information, the commodity identification information, and the synthesis information; updating, by display information update means, a memory content of the display-related data storage means, based on any one or a plurality of items of information designated by the shelf label display update instruction, the information including the shelf label identification information, the commodity identification information, and the synthesis information; generating, by display data generation means, display data, based on the display-related data having the memory content updated by the display information update means and on the template data stored in the template data storage means in association with the template data identification information included in the display-related data; and transmitting, by display data transmission means, based on the shelf label identification information included in the display-related data having the memory content updated, the generated display data to the shelf label terminal.

The present invention also provides an electronic shelf label system including: any one of the shelf label display control devices described above; and a shelf label terminal for displaying display data generated by the shelf label display control device.

Further, according to the present invention, the electronic shelf label system described above further includes a relay device connected between the shelf label display control device and the shelf label terminal.

### Effect of the Invention

According to the present invention, information to be displayed on a shelf label terminal capable of storing images and a plurality of display data items may be controlled freely without trouble.

### Brief Description of the Drawings

[FIG. 1] A diagram illustrating a configuration of an electronic shelf label system.
[FIG. 2] A functional block diagram of a shelf label display control device.
[FIG. 3] Afunctional block diagram of the shelf label display control device.
[FIG. 4] A diagram illustrating data examples in a terminal information table.
[FIG. 5] A diagram illustrating data examples in a displayed commodity identification table.
[FIG. 6] A diagram illustrating data examples in a display data identification table.
[FIG. 7] A diagram illustrating data examples in a display data configuration table.
[FIG. 8] A diagram illustrating data examples in a template data table.
[FIG. 9] A first diagram illustrating an example of display data.
[FIG. 10] A second diagram illustrating an example of display data.
[FIG. 11] Athird diagram illustrating an example of display data.
[FIG. 12] A fourth diagram illustrating an example of display data.
[FIG. 13] A fifth diagram illustrating an example of display data.
[FIG. 14] A sixth diagram illustrating an example of display data.
[FIG. 15] A flow chart illustrating a flow of a display data update process.
[FIG. 16] A flow chart illustrating a flow of a display data switching process.
[FIG. 17] A flow chart illustrating a flow of a process of associating a shelf label terminal with an item of merchandise.
[FIG. 18] A flow chart illustrating a flow of a process of canceling the association between a shelf label terminal and an item of merchandise.
[FIG. 19] A first diagram illustrating a flow of an update process based on a schedule table.
[FIG. 20] A second diagram illustrating a flow of the update process based on the schedule table.
[FIG. 21] A diagram illustrating data examples in the schedule table.

### Description of Symbols

1 ··· shelf label display control device
2 ··· host device
3 ··· user terminal
4 ··· relay device
5 ··· shelf label terminal
11 ··· communication processing section
12 ··· control section
13 ··· display data generation section
14 ··· display data switching section
15 ··· display data correction section
16 ··· display data output section
17 ··· database

### Best Mode for carrying out the Invention

In the following, a shelf label display control device according to an embodiment of the present invention is described with reference to the drawings.

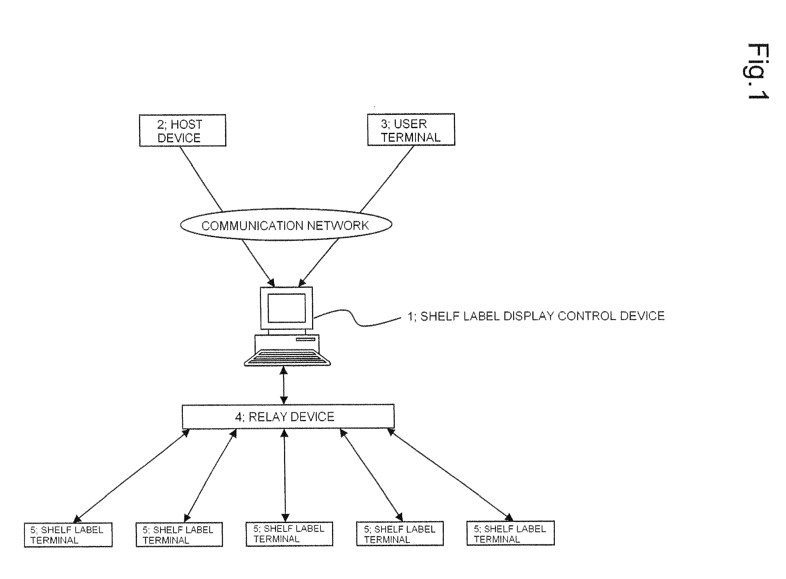

FIG. 1 is a diagram illustrating a configuration of an electronic shelf label system which includes the shelf label display control device according to the embodiment.

FIG. 1 illustrates a shelf label display control device 1, a host device 2 such as a server or a POS system, a user terminal 3 (such as a mobile terminal) used by a salesclerk at a store or the like, a relay device 4 for relaying display data transmitted by the shelf label display control device 1, and shelf label terminals 5 for displaying the display data relayed by the relay device 4. The shelf label display control device 1 is connected for communication with the host device 2, the user terminal 3, and the relay device 4 via a communication network. Further, the relay device 4 and each of the shelf label terminals 5 are connected with each other by radio.

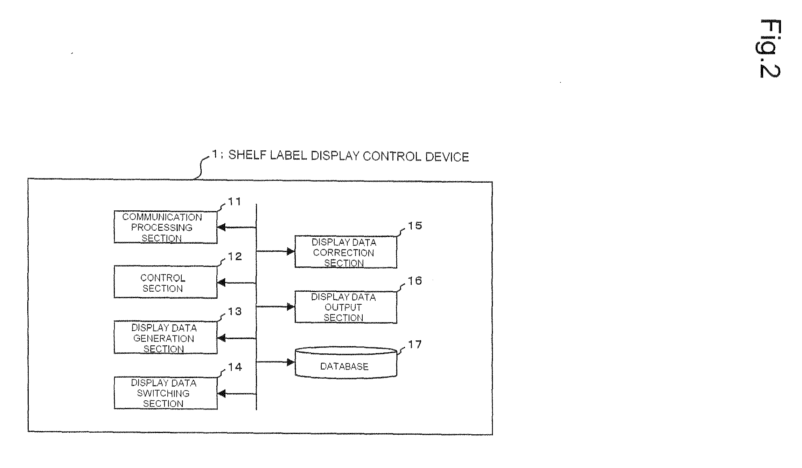

FIG. 2 is a functional block diagram of the shelf label display control device.

As illustrated in FIG. 2, the shelf label display control device 1 includes a communication processing section 11 for communicating with each device via the communication network, a control section 12 for controlling each processing section in the own device, a display data generation section 13 for generating display data to be displayed on the shelf label terminal 5, a display data switching section 14 for performing control of switching the display data, a display data correction section 15 for correcting the display data in accordance with the type of the shelf label terminal 5, a display data output section 16 for outputting, in response to an output instruction input thereto, display data displayed on the shelf label terminal 5 to a monitor or the like provided to the own device, and a database 17 storing various kinds of information.

Then, the shelf label display control device 1 according to the embodiment stores identification information on a commodity displayed on a shelf in a store in association with identification information on the shelf label terminal 5 displaying information on the commodity, and also stores template data on a display screen to be displayed on the shelf label terminal 5 in association with identification information on the template data. The shelf label display control device 1 further stores display-related data in which at least the identification information on the shelf label terminal 5, the identification information on the template data to be displayed on the shelf label terminal 5, and synthesis information to be displayed after being synthesized with the template data are associated with one another, and receives an input of a shelf label display update instruction which stores at least any one of the identification information on the shelf label terminal 5, the identification information on the commodity, and the synthesis information. Then, the shelf label display control device 1 updates the display-related data, based on any one or a plurality of the identification information on the shelf label terminal 5, the identification information on the commodity, and the synthesis information indicated by the shelf label display update instruction, and generates display data, based on the updated display-related data and the template data stored in association with the identification information on the template data included in the display-related data. Further, the shelf label display control device 1 performs processing of transmitting the generated display data to the shelf label terminal 5 based on the identification information on the shelf label terminal 5 included in the display-related data thus updated.

Next, a data table stored in the database of the shelf label display control device is described.

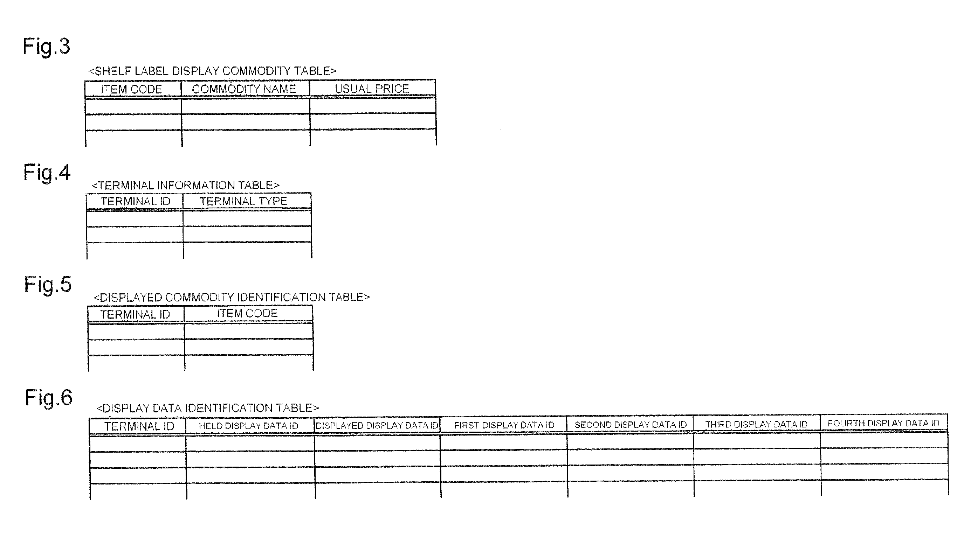

FIG. 3 is a diagram illustrating data examples in a shelf label display commodity table.

As illustrated in FIG. 3, the shelf label display commodity table stores an item code (identification information on a commodity displayed on a shelf in a store), a name of the commodity, and a price thereof, in association with one another. The information recorded in the shelf label display commodity table may include data obtained in advance from a point-of-sale (POS) system.

FIG. 4 is a diagram illustrating data examples in a terminal information table.

As illustrated in FIG. 4, the terminal information table stores a terminal ID and a terminal type in association with each other. The terminal type in this embodiment includes information indicating the size of the terminal, in which "0001" indicates a small-sized type and "0002" indicates a large-sized type.

FIG. 5 is a diagram illustrating data examples in a displayed commodity identification table.

As illustrated in FIG. 5, the displayed commodity identification table stores the terminal ID of a shelf label terminal 5 and an item code of a commodity displayed in a display part of the shelf label terminal, in association with each other.

FIG. 6 is a diagram illustrating data examples in a display data identification table.

As illustrated in FIG. 6, in the display data identification table, the terminal ID of the shelf label terminal 5, a held display data ID indicating one or a plurality of items of the display data held by the shelf label terminal 5, a displayed display data ID indicating display data currently displayed on the shelf label terminal 5, and first to fourth display data ID indicating display data registered as data that may be transmitted to the shelf label terminal 5 are recorded in association with one another.

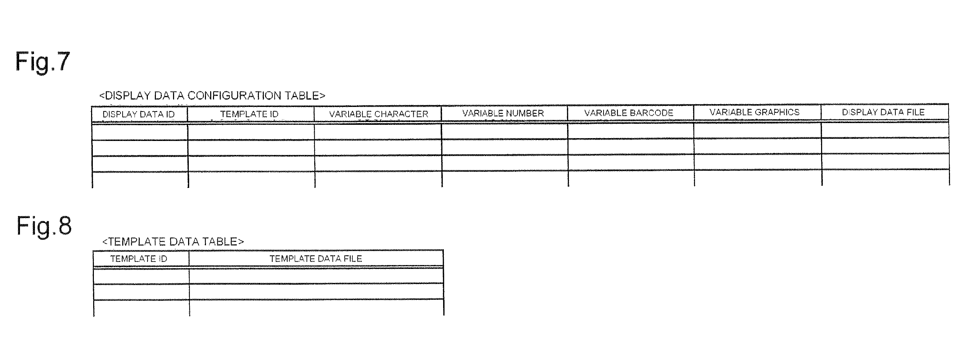

FIG. 7 is a diagram illustrating data examples in a display data configuration table.

As illustrated in FIG 7, in the display data configuration table, a display data ID, an ID of template data (template ID) used in display data corresponding to the display data ID, a variable character, a variable number, a variable barcode, variable graphics to be used in the display data, and a file (display data file) which is an entity of the display data are recorded in association with one another.

FIG. 8 is a diagram illustrating data examples in a template data table.

As illustrated in the drawing, in the template data table, a template ID and an entity file (template data file) of a template indicated by the template ID are recorded in association with each other.

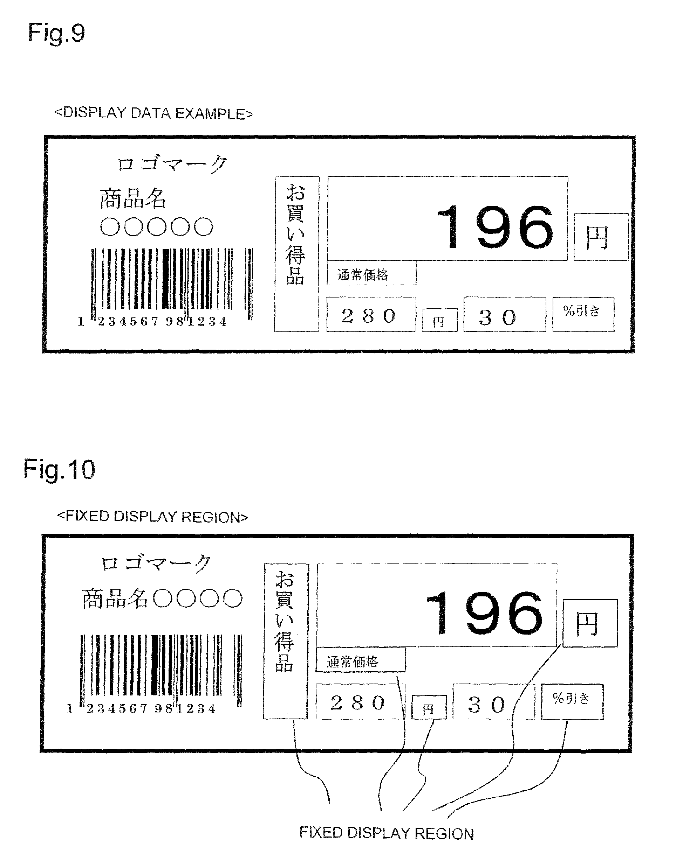

FIGS. 9 to 14 are first to sixth diagrams illustrating display data examples.

FIG. 9 illustrates a display data example, and FIG. 10 illustrates fixed display regions in the display data example. As illustrated in FIG. 10, the fixed display regions of the template data of the display data have character strings such as "GOOD BUY", "USUAL PRICE", "YEN", and "% DISCOUNT" displayed therein, which are unmodifiable. In other words, the template data includes information to be displayed as designs in those fixed display regions.

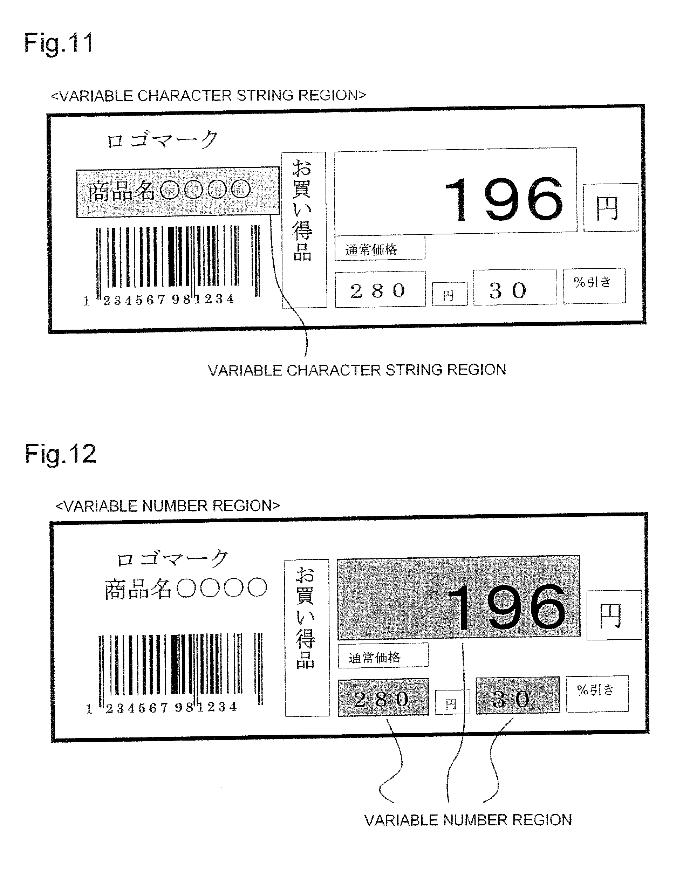

FIG. 11 illustrates a variable character string region, in which "COMMODITY NAME ○○○○" is displayed as an example. When the display data using the template data is employed, the commodity name in the variable character string region may be changed based on an instruction given for changing the region.

FIG. 12 illustrates variable number regions, in which number "280" indicating the usual price, number "30" indicating a discount rate, and number "196" indicating a discount price are displayed as an example. When the display data using the template data is employed, the numbers in the variable number regions may be changed based on an instruction given for changing the region.

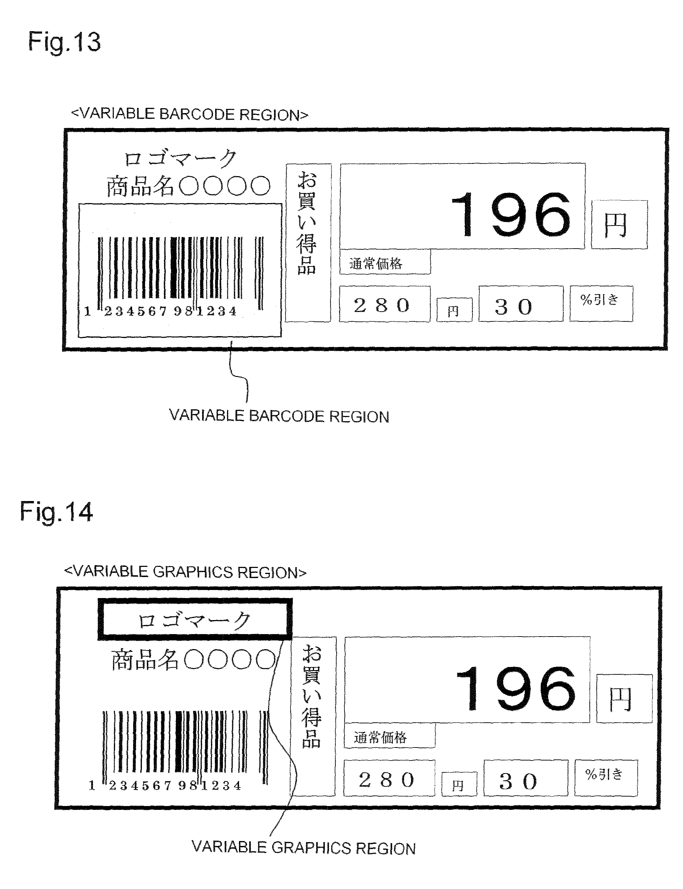

FIG. 13 illustrates a variable barcode region, in which a barcode storing data such as an item code for identifying the commodity is displayed as an example. When the display data using the template data is employed, the barcode in the variable barcode region may be changed based on an instruction given for changing the region.

FIG. 14 illustrates a variable graphics region, in which graphics such as a store logo is displayed as an example. When the display data using the template data is employed, the graphics in the variable graphics region may be changed based on an instruction given for changing the region.

Next, processing flows of the electronic shelf label system are described.

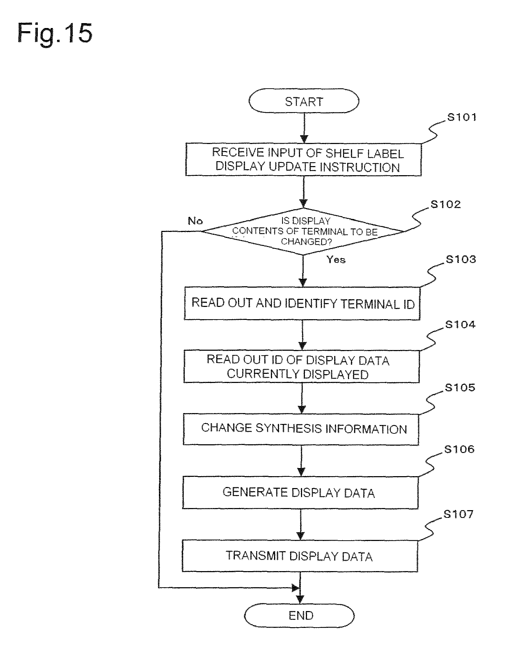

FIG. 15 is a flow chart illustrating a flow of processing of updating display data displayed on the shelf label terminal.

With reference to FIG. 15, the processing of updating display data displayed on the shelf label terminal is described.

Processing of transmitting display data to the shelf label terminal 5 is started when a predetermined display update instruction is received. The display update instruction is given, for example, when any item of information in the display data currently displayed on the shelf label terminal 5 is changed. Specifically, the display update instruction is given in such a case where information (price, discount rate, or discount price) in the variable number regions is changed, a case where information (commodity name) in the variable character string region is changed, in a case where information (item code) in the variable barcode region is changed, or a case where information (graphic data on a store logo) in the variable graphics region is changed. Alternatively, the display update instruction is also given in such a case where a time indicated by a time schedule is reached, or a case where a specific change instruction is input by a user.

First, the control section 12 of the shelf label display control device 1 receives an input of the shelf label display update instruction (Step S101). The shelf label display update instruction may be received from the host device 2, may be received from the user terminal 3, or may be directly input to the own device. The display data generation section 13 of the shelf label display control device 1 determines, when the input of the shelf label display update instruction is received, whether or not to change the display content of the terminal (Step S102). For example, in a case where the display data generation section 13 has determined that the usual price of the commodity corresponding to the item code is changed in the shelf label display commodity table (which may be determined by, for example, comparing the current usual price with a current usual price immediately after the update), a terminal ID recorded in the displayed commodity identification table (FIG. 5) in association with the item code is read out and identified (Step S103), and the ID of display data currently displayed is read out (Step S104), the ID being registered in the display data identification table (FIG. 6) in association with the terminal ID. Then, of the information on the variable number (synthesis information) recorded in the display data configuration table (FIG. 7) in association with the display data ID, information on the usual price is changed to a usual price after the update (Step S105).

Then, in a case where the display data configuration table is updated, the display data generation section 13 generates, based on the synthesis information such as the display data ID, the template data ID, the variable character, the variable number, the variable barcode, and the variable graphics stored in the display data configuration table (FIG. 7) after the update, display data added with the synthesis information on the template data file identified by the template ID (Step S106), and registers, as display data file, the generated display data in the display data configuration table (FIG. 7). Further, the display data generation section 13 transmits the generated display data to the shelf label terminal 5 identified by the terminal ID read out in Step S103 via the communication processing section 11 (Step S107). The shelf label terminal 5 which has received new display data performs processing of rewriting the display data currently displayed into the new display data thus received. The display data also stores the display data ID.

It should be noted that the shelf label terminal 5 may store a plurality of display data items, and the shelf label terminal 5 records various display data items received from the shelf label display control device 1 in a memory provided therein. Here, the display data generation section 13 of the shelf label display control device 1 sequentially records the display data IDs of generated display data items in the display data identification table (FIG. 6) in association with the columns under the terminal ID as a display target. In other words, when a plurality of display data items are generated for one shelf label terminal 5, the IDs of the display data items thus generated are sequentially registered in the columns of from a first display data ID to a fourth display data ID. Then, the display data ID of the data currently displayed is registered in the column under the displayed display data ID. Alternatively, for a specific terminal, only a specific display data item, of the plurality of display data items generated by the shelf label display control device 1, may be transmitted to the shelf label terminal 5. For example, the four display data items to be identified by the first to fourth display data IDs may be generated for one shelf label terminal 5, and only two of the four display data IDs may be transmitted to and held by the shelf label terminal 5. Then, the display data generation section 13 stores the display data IDs transmitted to the shelf label terminal 5, in the column under the held display data ID of the display data identification table (FIG. 6). The shelf label terminal 5 may perform switching, in response to a certain instruction, from the display into a designated display data item of a plurality of display data items stored therein.

By following the processing flow as described above, the shelf label display control device 1 dynamically generates display data to be displayed on the shelf label terminal 5, based on a shelf label display update instruction, and hence information to be displayed on a shelf label terminal capable of storing images and a plurality of display data items may be freely controlled without trouble.

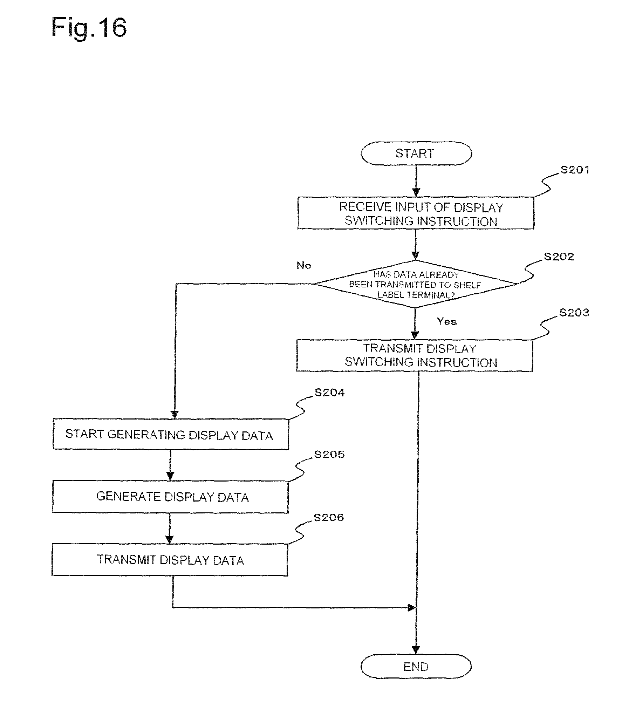

Next, with reference to FIG. 16, a description is given of processing of switching display data displayed on the shelf label terminal. FIG. 16 is a flow chart illustrating a flow of the processing of switching display data displayed on a shelf label terminal.

The display data switching processing in the shelf label terminal 5 is started when a predetermined display switching instruction is received. The display switching instruction stores information on a shelf label ID for identifying the shelf label terminal 5 and on a display data ID for identifying display data to be displayed after the switching. Then, the display data switching section 14 of the shelf label display control device 1 receives an input of the display switching instruction (Step S201). The display switching instruction may be received, for example, from the host device 2 or from the user terminal 3, or may be directly input to the shelf label display control device 1.

The display data switching section 14 of the shelf label display control device 1 receives an input of the display switching instruction, and reads out the terminal ID and the display data ID from the display switching instruction. Then, the display data switching section 14 refers to the display data identification table (FIG. 6), and determines whether or not the display data ID thus read out is stored in the column under the held display data ID corresponding to the terminal ID which has also been read out from the display switching instruction. In other words, the display data switching section 14 determines whether or not display data corresponding to the display data ID stored in the display switching instruction has already been transmitted to the shelf label terminal 5 (Step S202). Then, in a case where the display data ID read out from the display switching instruction is stored in the column under the held display data ID corresponding to the terminal ID which has also been read out from the display switching instruction, a display switching instruction storing the display data ID read out from the display switching instruction is transmitted to the shelf label terminal 5 identified by the terminal ID (Step S203). The shelf label terminal 5 that has received the display switching instruction reads out the display data ID stored in the display switching instruction, and performs processing of switching from the display data currently displayed into the display data and displaying the display data.

In Step S202, in a case where the display data ID read out from the display switching instruction is not stored in the column under the held display data ID corresponding to the terminal ID which has also been read out from the display switching instruction, the display data switching section 14 starts to generate display data to be transmitted (S204). Specifically, a template ID and synthesis information such as the variable character, the variable number, the variable barcode, and variable graphics stored in the display data configuration table (FIG. 7) in association with the display data ID read out from the display switching instruction are read out, and a template data file registered in the template data table (FIG. 8) in association with the template ID is also read out. Then, the synthesis information is synthesized with the template data file, and display data storing the display data ID is generated (Step S205). Then, the display data thus generated is transmitted to the shelf label terminal 5 identified by the terminal ID indicated by the display switching instruction (Step S206). Then, the display data ID identified by the display switching instruction transmitted in Step S203 and the display data ID identified by the display data transmitted in Step S206 are recorded in the column under the displayed display data ID of the display data identification table in association with the terminal ID of the shelf label terminal 5 to which those information items are transmitted.

When switching the display data by following the processing flow as described above, there is no need to newly generate display data that has already been transmitted to the shelf label terminal. Accordingly, the processing load to be imposed on the shelf label display control device may be reduced, for example, in a case where a large number of shelf label terminals are provided.

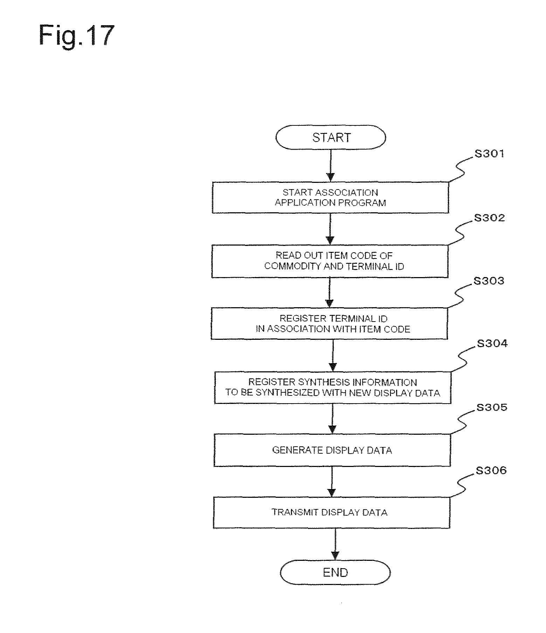

Next, with reference to FIG. 17, a description is given of processing of associating a shelf label terminal with an item of merchandise. FIG. 17 is a flow chart illustrating a flow of the processing of associating the shelf label terminal with the item of merchandise.

Each shelf label terminal 5 may be individually operated by a user so as to display data in the display part of the shelf label terminal 5. In such a case, the user first starts an association application program of the user terminal 3 or of the shelf label display control device 1 (Step S301), and scans a barcode printed on the commodity and a barcode printed on the shelf label terminal 5 by using a barcode reader stored in the user terminal 3 or attached to the shelf label display control device 1, to thereby read out the item code and the terminal ID of the commodity (Step S302). When the user terminal 3 is used to read the barcode, the user terminal 3 transmits association request information storing the item code of the commodity and the terminal ID, to the shelf label display control device 1.

Next, in the shelf label display control device 1, the display data generation section 13 refers to the item code and the terminal ID stored in the association request, or refers to the item code and the terminal ID received as being directly input from the barcode reader of the own device, so as to register, in the displayed commodity identification table (FIG. 5), the terminal ID in association with the item code (Step S303). Then, the variable character and the variable number corresponding to the commodity name and the usual price registered in the shelf label display commodity table (FIG. 3) in association with the item code are read out, and the variable barcode corresponding to the item code and the variable graphics to be displayed on the display data are read out from a storage area of a predetermined database 17. The variable character, the variable number, the variable barcode, and the variable graphics thus read out are registered in the display data configuration table (FIG. 7), so as to register synthesis information to be synthesized with new display data (Step S304).

Further, the issued display data ID is registered in an available column under any of the first to fourth display data ID of the display data identification table (FIG. 6) in association with the terminal ID read out from the association request, so as to generate display data identified by the display data ID (Step S305). Specifically, in association with the newly issued display data ID, the template ID and the synthesis information such as the variable character, the variable number, the variable barcode, and the variable graphics which are stored in the display data configuration table (FIG. 7) are read out, and a template data file registered in the template data table (FIG. 8) in association with the template ID is read out, so as to synthesize the synthesis information with the template data file and to generate the display data storing the display data ID. Then, the display data thus generated is transmitted to the shelf label terminal 5 identified by the terminal ID stored in the association request (Step S306). Further, the display data ID identified by the display data transmitted in Step S306 is recorded in the columns under the displayed display data ID and the held display data ID of the display data identification table (FIG. 6) in association with the terminal ID of the shelf label terminal 5 to which the information as described above is transmitted.

By following the processing flow as described above, the user simply has to read a barcode printed on the shelf label terminal 5 and a barcode printed on a commodity by using a barcode reader so as to associate the shelf label terminal 5 with the commodity, to thereby cause the shelf label terminal 5 to display the price and the commodity name of the commodity, which saves the user a lot of labor when, for example, individually changing the display of the shelf label terminal 5.

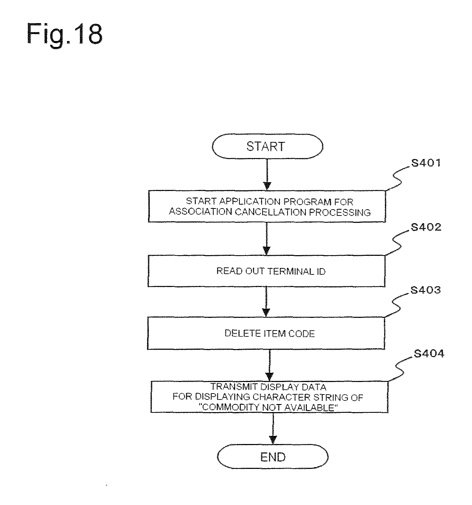

Next, with reference to FIG. 18, a description is given of association cancellation processing between a shelf label terminal and an item of merchandise. FIG. 18 is a flow chart illustrating a flow of the association cancellation processing between a shelf label terminal and an item of merchandise.

Each display of the display data may be individually operated by a user to be stopped, when the association between the display data displayed in the display part of the shelf label terminal 5 and the commodity related to the display data is cancelled to stop the display of the display data. In such a case, the user first starts an association cancellation processing application program of the user terminal 3 or of the shelf label display control device 1 (Step S401), and scans a barcode printed on the shelf label terminal 5 by using a barcode reader stored in the user terminal 3 or attached to the shelf label display control device 1, to thereby read out the terminal ID (Step S402). When the user terminal 3 is used to read the barcode, the user terminal 3 transmits association cancellation request information storing the terminal ID to the shelf label display control device 1.

Next, in the shelf label display control device 1, the display data switching section 14 deletes the corresponding item code from the displayed commodity identification table (FIG. 5) in which an item code is associated with the terminal ID stored in the association cancellation request or with the terminal ID received as being directly input from the barcode reader of the own device (Step S403). Then, the display data switching section 14 reads out, from the database 17, display data for displaying a character string of "COMMODITY NOT AVAILABLE" in the shelf label terminal 5 identified by the terminal ID stored in the association cancellation request, and transmits the display data to the corresponding shelf label terminal 5 (Step S404). The shelf label terminal 5 receives the display data and displays the character string of "COMMODITY NOT AVAILABLE". The display data switching section 14 of the shelf label display control device 1 clears the column under the displayed display data ID which is registered in the display data identification table (FIG. 6) in association with the terminal ID.

By following the processing flow as described above, the display of the displayed data displayed on the shelf label terminal 5 is cancelled and display data for displaying "COMMODITY NOT AVAILABLE" is displayed. Accordingly, the user may easily find a shelf label terminal which is not associated with a commodity from a large number of shelf label terminals provided.

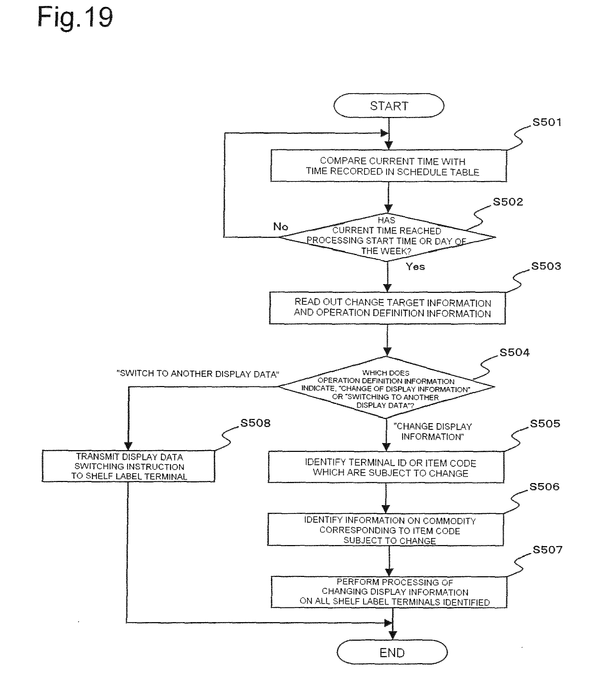

Next, with reference to FIGS. 19 to 21, a description is given of processing of updating display data based on a schedule table.

FIG. 19 is a first diagram illustrating a flow of the processing of updating display data based on the schedule table.

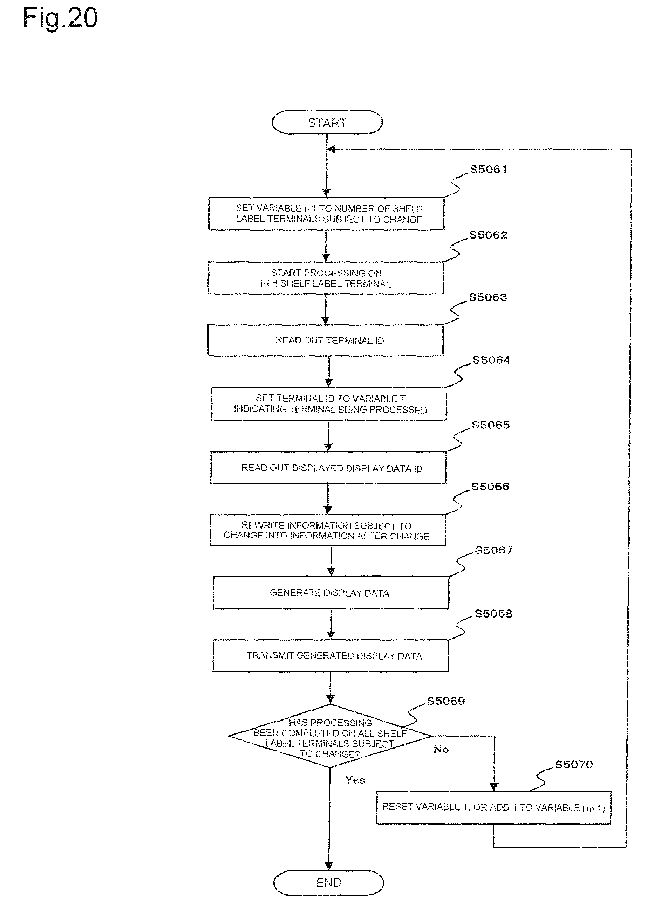

FIG. 20 is a second diagram illustrating a flow of the processing of updating display data based on the schedule table.

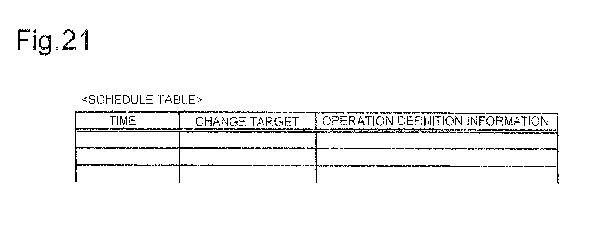

FIG. 21 is a diagram illustrating data examples in the schedule table.

As illustrated in FIG. 21, the schedule table includes time information, change target information, operation definition information, which are associated with one another. The time information stores, for example, information on a start time of the processing or on a day of the week to start the processing. The change target information stores the terminal ID of a shelf label terminal 5 subject to change and the item code of a commodity subject to change. The operation definition information stores information on switching to another display data stored in the shelf label terminal 5 and on changing of display information (such as price and discount rate) of display data.

The display data is updated based on the schedule table as follows. First, the control section 12 compares a current time counted by a time counter provided to the own device and a time stored in the schedule table (Step S501), determines whether or not a processing start time or day of the week is reached (Step S502), and repeats the process until the time or day of the week is reached. Further, in a case where the processing start time or day of the week is reached, the change target information and the operation definition information registered in the schedule table in association with the information corresponding to the time is read out (Step S503). Then, the control section 12 determines whether the operation definition information indicates "change of display information" or indicates "switching to another display data" (Step S504). In a case where the operation definition information indicates "change of display information", the display data generation section 13 identifies the terminal ID and the item code which are subject to the change (Step S505), and identifies, from the corresponding data table, the shelf label terminal 5 identified by the terminal ID subject to the change or the shelf label terminal 5 displaying information on the commodity corresponding to the item code subject to the change (Step S506). Then, display information of all the shelf label terminals 5 thus identified are subject to the change processing (Step S507).

Alternatively, in a case where the operation definition information indicates "switching to another display data" in Step S504, the display data switching section 14 transmits, based on the display data ID identifying the another display data and the terminal ID of the shelf label terminal 5 to be subject to the change, a display data switching instruction storing the information to the corresponding shelf label terminal 5 (Step S508).

In the processing of Step S507 described above, the display data generation section 13 sets a variable i=1, where the variable i denotes the number of the shelf label terminals 5 to be changed (Step S5061), and starts the processing on the first shelf label terminal 5 (Step S5062). Further, the display data generation section 13 reads out the terminal ID of the first shelf label terminal 5 from, for example, the displayed commodity identification table (FIG. 5) recording the terminal ID in association with the item code subject to the change (Step S5063), and sets the terminal ID to a variable T indicating the terminal being processed (Step S5064). Then, the display data generation section 13 reads out the displayed display data ID which is recorded in the display data identification table (FIG. 6) in association with the terminal ID of the terminal being processed (Step S5065), and rewrites, of the synthesis information such as the variable character, the variable number, the variable barcode, and the variable graphics, recorded in the display data configuration table (FIG. 7) in association with the display data ID, the information subject to the change, into the information after the change (Step S5066). For example, when the discount rate of the price is changed, the information of the variable number on the discount rate is rewritten.

Then, the display data generation section 13 reads out the template ID and the synthesis information such as the variable character, the variable number, the variable barcode, and the variable graphics after the change, which are stored in the display data configuration table (FIG. 7) in association with the display data ID of the data displayed on the shelf label terminal 5 being processed, while reading out template data files registered in the template data table (FIG. 8) in association with the template ID, synthesizes the synthesis information after the change with the template data files, and generates display data storing the display data ID (Step S5067). Then, the display data thus generated is transmitted to the shelf label terminal 5 identified by the shelf label ID denoted by the variable T (Step S5068). Then, the display data generation section 13 determines whether or not the processing has been completed on all the shelf label terminals 5 subject to the change (Step S5069). When the processing has not been completed, the variable T is reset, or 1 is added to the variable i (Step S5070), and the above-mentioned processing is repeated. It should be noted that the display data ID identified by the display data transmitted in Step S5068 is recorded in the columns under the displayed display data ID and the held display data ID of the display data identification table (FIG. 6) in association with the terminal ID of the shelf label terminal 5 to which the information is transmitted.

By following the processing flow as described above, the processing of automatically updating display data based on the schedule table may be performed, which may allow the salesclerk at the store to perform the processing of changing information in the shelf label terminals with reduced effort. Further, with the system described above, a discount price for a certain commodity may be calculated by multiplying the usual price by a specific discount rate and the discount price may be displayed all at once when a certain time is reached.

In other words, by following the above-mentioned processing according to the embodiment described above, information to be displayed on the shelf label terminal capable of storing images and a plurality of display data items may be freely controlled without trouble.

It should be noted that FIGS. 9 to 14 each illustrate an example in a case where the variable graphic data is synthesized with a partial region of a template data. However, the variable graphic data may be a design which is synthesized as a background in the entire region of the template data. For example, data corresponding to each season such as Christmas and New Year Holidays may be prepared as the variable graphic data in the same size as the size of the template data, and the data may simultaneously be updated at a predetermined season based on the schedule table.

Further, in the above, a description has been given of the processing of transmitting a plurality of different kinds of display data to the shelf label terminals 5 and causing the shelf label terminals 5 to store the data, and recording the ID of the display data transmitted to the shelf label terminals 5 and the entity file of the display data in the display data identification table (FIG. 6) and in the display data configuration table (FIG. 7). However, the display data output section 16 of the shelf label display control device 1 may receive an input of a terminal ID, and may output display data currently displayed on the shelf label terminal 5 identified by the terminal ID to a monitor. With this configuration, the user may instantly identify at remote sites which shelf label terminal displays which display data.

Further, in the processing described above, the display data may be generated by being changed in size in accordance with the terminal type of the shelf label terminal 5, and may be transmitted to the shelf label terminal 5. In this case, the display data correction section 15 of the shelf label display control device 1 performs processing of identifying the terminal type registered in the terminal information table in association with the terminal ID stored in the shelf label display update instruction, and correcting the generated display data into display data in size corresponding to the size indicated by the terminal type thus identified (the terminal type of "0001" indicates a small type, while "0002" indicates a large type).

It should be noted that the shelf label display control device, the host device, the user terminal, the relay device, and the shelf label terminal described above each includes a computer system provided therein. Then, the process steps in the above-mentioned processing is stored as a program in a computer-readable storage medium, and the computer reads out and executes the program, to thereby implement the above-mentioned processing. Here, the computer-readable storage medium includes a magnetic disk, a magnetooptical disk, a CD-ROM, a DVD-ROM, a semiconductor memory, or the like. Alternatively, the computer program may be distributed to the computer via a communication network or the like, and a computer that has received the distribution may execute the program.

Further, the program described above may be intended for implementing a part of the functions described above. Still further, the program may include a so-called differential file (differential program), which is capable of implementing the function described above in combination with a program already stored in the computer system.

In the above, the embodiment of the present invention has been described with reference to the drawings. However, the specific configuration of the invention is not limited to the embodiment, and may include any other design or the like which does not depart from the gist of the present invention.

### Industrial Applicability

The present invention may be suitably applied to a shelf label display control device for displaying prices of commodities displayed on store shelves, but is not limited thereto.

## Claims

1. A shelf label display control device for controlling display information in a shelf label terminal, comprising:
shelf label display commodity storage means for storing commodity identification information for identifying a commodity in association with shelf label identification information for identifying the shelf label terminal that displays information on the commodity;
template data storage means for storing template data identification information for identifying template data for a display screen to be displayed on the shelf label terminal and storing the template data in association with the template data identification information;
display-related data storage means for storing display-related data in which at least the shelf label identification information, template data identification information of template data to be displayed on the shelf label terminal identified by the shelf label identification information, and synthesis information to be displayed after being synthesized with the template data are associated with one another;
display update instruction reception means for receiving an input of a shelf label display update instruction storing at least any one of the shelf label identification information, the commodity identification information, and the synthesis information;
display information update means for updating a memory content of the display-related data storage means, based on any one or a plurality of items of information designated by the shelf label display update instruction, the information including the shelf label identification information, the commodity identification information, and the synthesis information;
display data generation means for generating display data, based on the display-related data having the memory content updated by the display information update means and on the template data stored in the template data storage means in association with the template data identification information included in the display-related data; and
display data transmission means for transmitting, based on the shelf label identification information included in the display-related data having the memory content updated, the generated display data to the shelf label terminal.

2. A shelf label display control device according to claim 1, further comprising:
display switching instruction input reception means; and
display data switching means, wherein:
the display-related data storage means stores a plurality of different items of display-related data identification information in association with the shelf label identification information;
the display switching instruction input reception means receives an input of a display switching instruction storing the shelf label identification information and the display-related data identification information; and
the display data switching means transmits the display-related data identification information indicated by the display switching instruction, based on the shelf label identification information indicated by the display switching instruction, to the shelf label terminal.

3. A shelf label display control device according to claim 1 or 2, further comprising:
display data storage means;
displayed data storage means; and
displayed data output means, wherein:
the display data transmission means transmits a plurality of items of display data to be stored in the shelf label terminal, to the shelf label terminal;
the display data storage means stores each of the plurality of items of display data in association with display data identification information for identifying the item of the display data;
the displayed data storage means stores the display data identification information on display data currently displayed; and
the displayed data output means receives an input of an output instruction of the display data currently displayed, reads out the display data identification information stored in the displayed data storage means, and outputs the display data stored in the displayed data storage means in association with the display data identification information.

4. A shelf label display control device according to any one of claims 1 to 3, further comprising display data correction means, wherein:
the display-related data storage means stores, as the display-related data, type information of the shelf label terminal in association with the shelf label identification information; and
the display data correction means corrects the generated display data so as to correspond in size to the type information associated with the shelf label identification information stored in the shelf label display update instruction.

5. A shelf label display control method used in a shelf label display control device for controlling display information in a shelf label terminal, comprising:
storing, by shelf label display commodity storage means, commodity identification information for identifying a commodity in association with shelf label identification information for identifying the shelf label terminal that displays information on the commodity;
storing, by template data storage means, template data identification information for identifying template data for a display screen to be displayed on the shelf label terminal and storing the template data in association with the template data identification information;
storing, by display-related data storage means, display-related data in which at least the shelf label identification information, template data identification information of template data to be displayed on the shelf label terminal identified by the shelf label identification information, and synthesis information to be displayed after being synthesized with the template data are associated with one another;
receiving, by display update instruction reception means, an input of a shelf label display update instruction storing at least any one of the shelf label identification information, the commodity identification information, and the synthesis information;
updating, by display information update means, a memory content of the display-related data storage means, based on any one or a plurality of items of information designated by the shelf label display update instruction, the information including the shelf label identification information, the commodity identification information, and the synthesis information;
generating, by display data generation means, display data, based on the display-related data having the memory content updated by the display information update means and on the template data stored in the template data storage means in association with the template data identification information included in the display-related data; and
transmitting, by display data transmission means, based on the shelf label identification information included in the display-related data having the memory content updated, the generated display data to the shelf label terminal.

6. An electronic shelf label system, comprising:
the shelf label display control device according to any one of claims 1 to 4; and
a shelf label terminal for displaying display data generated by the shelf label display control device.

7. An electronic shelf label system according to claim 6, further comprising a relay device connected between the shelf label display control device and the shelf label terminal.
